(19) Europäisches Patentamt
European Patent Office
Office européen des brevets

(11) **EP 3 339 932 B1**

(12) **FASCICULE DE BREVET EUROPEEN**

(45) Date de publication et mention de la délivrance du brevet:
**21.08.2019 Bulletin 2019/34**

(51) Int Cl.:
*G02B 15/14* *(2006.01)*    *G02B 15/177* *(2006.01)*
*G02B 27/00* *(2006.01)*

(21) Numéro de dépôt: **17207943.6**

(22) Date de dépôt: **18.12.2017**

(54) **ZOOM OPTIQUE A PUPILLE MOBILE**

OPTISCHER ZOOM MIT BEWEGLICHER PUPILLE

OPTICAL ZOOM WITH MOBILE PUPIL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2016 FR 1601807**

(43) Date de publication de la demande:
**27.06.2018 Bulletin 2018/26**

(73) Titulaire: **Thales**
**92400 Courbevoie (FR)**

(72) Inventeurs:
• **COUMERT, Bruno**
**42570 SAINT HEAND (FR)**
• **MANEVAL, Florence**
**42000 SAINT-ETIENNE (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**US-A1- 2007 258 150      US-A1- 2009 135 497**
**US-A1- 2010 020 410      US-A1- 2011 304 921**
**US-A1- 2013 250 160**

**Description**

Le domaine d'invention est celui des objectifs de prise de vue, et plus précisément, celui des zooms optiques. On entend par zoom optique une optique dans laquelle la variation de champ est effectuée optiquement et non pas électroniquement.

Un zoom possède généralement plusieurs sous-ensembles optiques appelés « éléments », dont certains sont fixes et d'autres mobiles le long de l'axe optique du système. Une architecture classique de zoom comprend plusieurs éléments optiques détaillés ci-dessous :

- un premier élément fixe qui permet de former une image le plus souvent virtuelle de l'objet observé reprise par un second élément ;
- des second et troisième éléments mobiles qui permettent de faire varier la focale du zoom et de conserver un tirage image constant lorsque la focale varie ;
- un quatrième élément fixe qui reprend l'image formée par les éléments précédents et la forme dans le plan du capteur qui peut être un film ou un capteur numérique par exemple ;

Dans le cas d'un zoom à compensation mécanique, les mouvements des second et troisième éléments suivent des lois complexes indépendantes pour assurer la netteté du plan focal quelle que soit la valeur de la focale.

L'ouverture du zoom, qui régit la quantité de lumière reçue, est dictée par le diamètre de la pupille. Dans les conceptions classiques, la pupille, généralement matérialisée par un iris de diamètre variable, a souvent une position fixe et se situe alors soit entre le troisième et le quatrième élément ou encore à l'intérieur du quatrième élément. La pupille de sortie occupe donc une position fixe, tandis que la pupille d'entrée se déplace le long de l'axe optique et a un diamètre variable dépendant de la focale du zoom.

Ainsi, lors d'un changement de focale, c'est-à-dire lorsque les deuxième et troisième éléments se déplacent, les diamètres utiles des lentilles situées entre le troisième élément et le plan image restent constants tandis qu'ils varient pour les lentilles situées entre le troisième élément et l'avant du zoom.

Les aberrations de champ telles que la coma, l'astigmatisme ou la distorsion dépendent de la position de la pupille de sorte que celle-ci constitue également un degré de liberté pour l'optimisation du zoom.

Les zooms de ce type fonctionnant sur une plage étendue de focales appelée « range » possèdent souvent des optiques frontales de grand diamètre qui sont à la fois délicates à réaliser, coûteuses et peuvent alourdir et déséquilibrer le zoom. Certaines solutions ou certains compromis existent déjà pour réduire les diamètres, masses et coûts des composants optiques dans un zoom. Les compromis suivants peuvent notamment être faits : réduction du « range » du zoom, augmentation des focales, diminution de l'ouverture, ouverture variable en fonction de la course du zoom ou « ramping » mais ces compromis se font nécessairement au détriment des performances finales.

Pour un nombre d'ouverture donné N, le diamètre de la pupille d'entrée $\Phi$ s'écrit en fonction de la focale F:

$$N = F/\Phi \quad \text{ou} \quad \Phi = F/N$$

La taille d'une optique dépend de la taille de la pupille et de la distance de la pupille. Quand la pupille est éloignée, des champs élevés conduisent à des dimensions optiques significatives.

Dans le cas de très longues focales, le diamètre des optiques frontales est régi par l'ouverture. On peut éventuellement tolérer du « ramping », c'est-à-dire un vignettage du faisceau sur l'axe aux longues focales pour chercher à minimiser le diamètre des optiques frontales.

Dans le cas de systèmes à très courte focale, le diamètre des optiques frontales dépend principalement de la position axiale de la pupille d'entrée de l'objectif et, bien sûr, de la valeur du champ. D'après la relation ci-dessus, le diamètre de pupille, faible dans cette configuration, influe assez peu.

On cherche donc une architecture optique qui permette d'avoir une pupille d'entrée la plus proche possible des lentilles frontales. Ceci peut être obtenu par exemple, en déplaçant le premier élément afin qu'il reste à proximité de la pupille d'entrée du système lorsque la focale du système varie. Cette solution a notamment été présentée par la société « Carl Zeiss » dans la publication intitulée « Zoom lens design for projection optics », Proceedings of SPIE volume 9626, 962617. Elle montre un exemple de zoom qui possède un premier élément mobile divergent, suivi d'un second élément mobile convergent et d'un troisième élément fixe. La pupille du système est fixe et se trouve en entrée du troisième élément. En déplaçant les deux premiers éléments, on constate qu'il est possible de conserver des optiques frontales de diamètres raisonnables.

Néanmoins, un tel procédé s'avère surtout efficace pour des zooms ayant un faible range et devient vite inefficace pour des ranges élevés. Par ailleurs, cette solution est rarement envisagée pour des raisons d'esthétisme et à cause des problèmes d'étanchéité que cela peut parfois occasionner, le zoom ne travaillant pas à volume constant. En outre, la translation du premier élément ou d'un module interne à ce premier élément est généralement utilisée pour la focalisation à distance proche car les lois de déplacement sont alors indépendantes de la focale du zoom.

Le document US2013250160 intitulé «Zoom lens with forward-located aperture stop » propose une solution composée de quatre groupes de lentilles :

- un premier groupe fixe divergent
- une pupille mobile située entre le premier et le second groupe ;
- un second groupe mobile convergent
- un troisième groupe mobile convergent et un quatrième groupe très légèrement convergent.

Cette publication montre que le fait de positionner une pupille mobile entre les deux premiers éléments et de lui laisser la possibilité de suivre sa propre loi de déplacement permet de maîtriser les diamètres des optiques frontales et arrières. Ce procédé garantit que le ratio des diamètres entre la plus grande lentille et la plus petite lentille du système n'excède pas un rapport deux. Un tel système n'est également efficace que pour des zooms ayant des ranges de zoom raisonnables, car s'il permet de réduire le diamètre des optiques frontales, il entraîne une augmentation significative des diamètres des lentilles des second et troisième éléments. Pour des plages de focales étendues, les diamètres des lentilles des groupes intermédiaires peuvent devenir plus grands que ceux du premier élément.

Le second obstacle limitant les rayons après la pupille est la lucarne. Des architectures à deux diaphragmes mobiles sont décrites dans la littérature. On citera, par exemple, le brevet US 3 918 798 intitulé « Zoom lens having two diaphragms » qui décrit une architecture optique de ce type.

Un autre des inconvénients de ces dernières solutions est que le déplacement de la pupille entraîne des changements de l'ouverture du zoom qui ne sont pas souhaités.

Le zoom selon l'invention ne présente pas ces inconvénients. Plus précisément, l'invention a pour objet un zoom optique tel que défini dans la revendication indépendante 1.

Avantageusement, pour une focale de zoom donnée, la position de la pupille est celle qui minimise l'aberration de champ la plus importante à ladite focale.

Avantageusement, pour les longues focales du zoom, la position de la pupille est celle qui minimise la coma et pour les focales courtes du zoom, la position de la pupille est celle qui minimise l'astigmatisme et/ou la courbure de champ.

Avantageusement, la pupille étant un iris métallique, les déplacements et les variations de cet iris sont assurés par des premiers systèmes de cames couplés avec des seconds systèmes de came actionnant les déplacements des éléments optiques mobiles du zoom.

L'invention sera mieux comprise et d'autres avantages apparaîtront à la lecture de la description qui va suivre donnée à titre non limitatif et grâce aux figures annexées parmi lesquelles :

Les figures 1 et 2 représentent un zoom selon l'art antérieur ;
Les figures 3 et 4 représentent un zoom à pupille mobile selon l'invention ;
Les figures 5, 6 et 7 représentent la propagation des rayons lumineux dans un système optique comportant plusieurs modules ;
La figure 8 représente les conséquences d'un déplacement de pupille sur les aberrations d'un système optique.

Le zoom selon l'invention possède quatre groupes de lentilles, appelés « éléments » et notés successivement de 1 à 4, l'élément 1 étant situé à l'entrée du zoom et l'élément 4 à la sortie au plus près du plan focal. L'élément 1 dudit zoom est fixe en fonction de la focale, les éléments 2 et 3 sont mobiles. Ces éléments 2 et 3 sont respectivement convergent et divergent. Ils permettent de faire varier la focale du zoom tout en conservant un plan image fixe. L'élément 4 est un élément fixe convergent.

Le zoom comporte une pupille mobile matérialisée par un iris dont on peut faire varier le diamètre d'ouverture par une action mécanique. Cet iris peut se situer dans l'élément 2 du zoom, entre son élément 2 et son élément 3, dans son élément 3 ou entre son élément 3 et son élément 4. Le diamètre de cet iris est ajusté en fonction de la position qu'il occupe dans le système. On peut ainsi garder l'ouverture du système constante lorsque l'iris se déplace.

En déplaçant cet iris, et en ajustant son diamètre, on améliore les caractéristiques et les performances du zoom par rapport à un zoom à iris fixe. Ainsi, on peut :

- réduire les diamètres des lentilles frontales de l'élément 1 ;
- réduire leur coût de fabrication ;
- réduire la masse totale du système.

Par ailleurs, le déplacement de la pupille permet de libérer un paramètre de calcul supplémentaire lors de l'optimisation de la combinaison optique, et va dans le sens d'une meilleure correction des aberrations du système, et donc d'une meilleure qualité d'imagerie, les aberrations de champ dépendent en effet de la position de la pupille.

Au déplacement de l'iris, on peut associer le déplacement et la variation de diamètre d'une lucarne située en amont de l'iris mobile, et/ou le déplacement et la variation de diamètre d'une lucarne située en aval de cet iris. Cette lucarne mobile permet de contrôler de manière optimale le vignettage de façon à réduire les aberrations transverses dans le plan image et à maîtriser la perte d'éclairement entre le centre et le bord de champ. Ce contrôle qui dépend de la focale du zoom peut maintenir l'ouverture du zoom en n'agissant que sur les rayons de champ.

La pupille peut ainsi passer d'un élément à l'autre ou traverser un élément lors d'une variation de focale du système. S'il est mécaniquement difficile de déplacer un iris de l'autre côté d'un groupe de lentilles, il est en revanche possible qu'au cours du déplacement des éléments 2 et 3, une lucarne qui vignette le faisceau optique dans le champ se transforme à son tour en pupille délimitant le faisceau sur l'axe. En s'autorisant un tel déplacement de pupille d'un élément à l'autre, on peut augmenter sensiblement la course totale de déplacement de ladite pupille.

A titre d'exemple de réalisation, on compare deux zooms dont les caractéristiques optiques sont équivalentes mais le premier zoom Z1 comporte une pupille fixe $P_F$ et le second zoom Z2 comporte une pupille mobile $P_M$ selon l'invention. Dans les deux configurations, la focale des zooms varie entre 15 mm et 40mm et leur ouverture est de F/2.6.

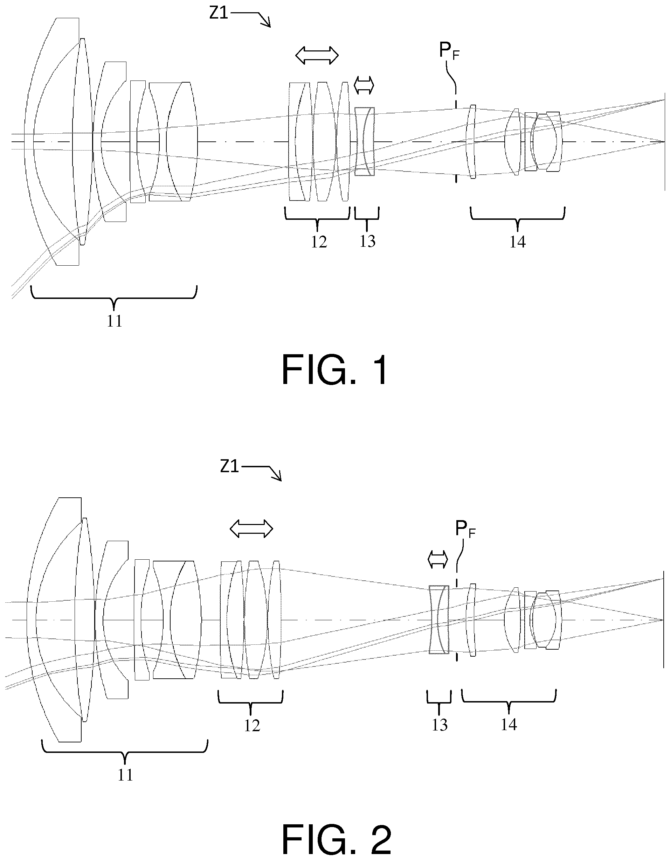

Le zoom Z1 représenté sur les figures 1 et 2 comporte un élément 11 fixe divergent, un élément 12 mobile convergent, un élément 13 mobile divergent et un élément 14 fixe convergent. La pupille $P_F$ est fixe et localisée entre l'élément 13 et l'élément 14.

En figure 1, ce zoom Z1 est représenté dans une configuration où les positions des éléments 12 et 13 permettent d'obtenir une focale courte. En figure 2, ce zoom Z1 est représenté dans une configuration où les positions des éléments 12 et 13 permettent d'obtenir une focale longue.

Les lentilles frontales de l'élément 11 sont de plus grand diamètre que celui des les lentilles situées à l'arrière du zoom. Par ailleurs, les zones utiles sur ces lentilles frontales sont maximales à la courte focale comme on le voit sur la figure 1, les zones utiles étant les surfaces couvertes par les rayons lumineux sur chaque dioptre.

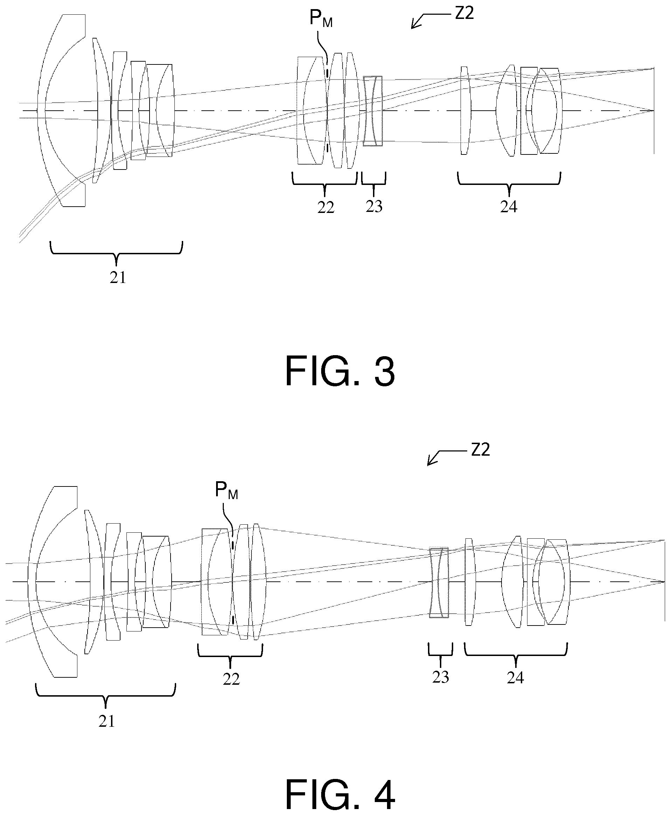

Le zoom Z2 représenté sur les figures 3 et 4 comporte un élément 21 fixe divergent, un élément 22 mobile convergent, un élément 23 mobile divergent et un élément 44 fixe convergent. La pupille $P_M$ est mobile.

En figure 3, ce zoom Z2 est représenté dans une configuration où les positions des éléments 22 et 23 permettent d'obtenir une focale courte. En figure 4, ce zoom Z2 est représenté dans une configuration où les positions des éléments 22 et 23 permettent d'obtenir une focale longue.

Ce zoom Z2 a été calculé en prenant comme base de départ le zoom Z1 et possède, contrairement à ce dernier, une pupille mobile $P_M$ à diamètre variable qui est située à l'intérieur de l'élément 22. Dans cet exemple, la pupille se déplace en suivant la même loi de déplacement que celle de l'élément 22. Par ailleurs, ce zoom a été calculé sur la base des mêmes propriétés que celle du zoom Z1 à pupille fixe des figures 1 et 2, c'est-à-dire que ses focales, son format d'image, sa longueur, sa distorsion, sa fonction de transfert de modulation ou « FTM » sont identiques ou voisins de ceux du zoom Z1.

Le déplacement de l'iris permet d'obtenir une pupille d'entrée plus proche des lentilles constituant l'élément 1, notamment, dans le cas d'un iris fixe. En effet, la pupille d'entrée du zoom Z1 se situe à 44mm du premier dioptre, tandis que la pupille d'entrée du zoom Z2 se situe à 36mm du premier dioptre.

En courte focale, les deux zooms possèdent un champ important. Le diamètre des premières lentilles dépend donc essentiellement de la position de la pupille d'entrée. Ainsi, dans la combinaison à iris fixe du zoom Z1, la première lentille possède un diamètre de 87mm, tandis que dans la combinaison optique à iris mobile du zoom Z2, ce diamètre est réduit à 67mm.

En réduisant les diamètres des lentilles du zoom Z2, on réduit également la masse du zoom Z2 d'environ 45% par rapport à celle de Z1. En effet, le premier zoom a un poids d'environ 700 grammes tandis que le second zoom a un poids d'environ 400 grammes. Cela permet par ailleurs de réduire globalement le coût de fabrication des lentilles.

En déplaçant l'iris, on déplace également la pupille de sortie du système, dans le même sens de déplacement que l'iris. Dans l'exemple ci-dessus, on constate que les lentilles du groupe arrière du zoom Z2 possèdent un diamètre plus important dans la solution à iris mobile, puisque l'on éloigne la pupille de sortie du plan image. Cependant, l'avantage de cette solution est que la configuration du zoom Z2 est plus proche des conditions de télécentricité, c'est-à-dire une pupille de sortie située à l'infini. Cette configuration permet d'avoir des incidences sur le détecteur indépendantes du champ et garantit donc de meilleures homogénéités de réponse.

Un des autres avantages de la configuration de zoom à pupille mobile est qu'elle permet une meilleure optimisation de la combinaison optique.

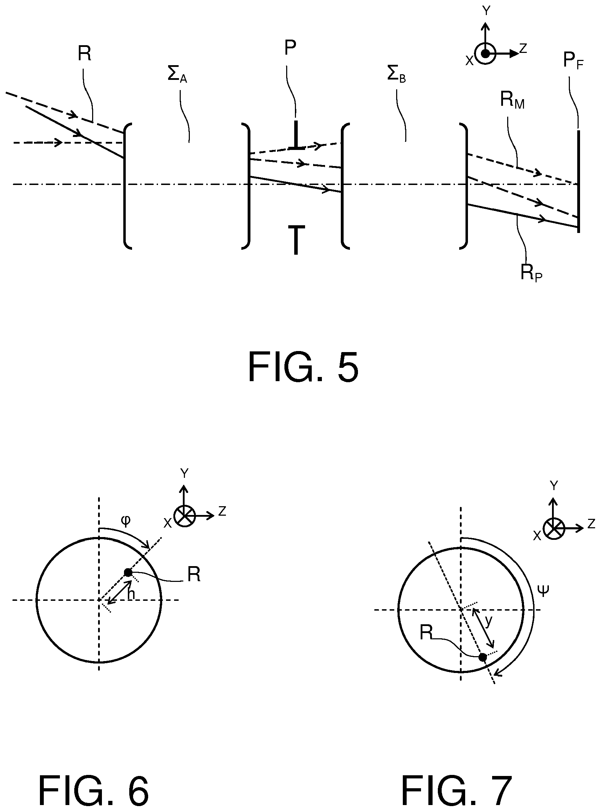

On considère le système optique des figures 5, 6 et 7, composé de deux sous-ensembles optiques ou « modules » $\Sigma_A$ et $\Sigma_B$ référencés dans un repère (x, y, z) comme indiqué sur la figure 5. Le plan focal de l'ensemble des deux modules est noté $P_F$. Dans l'espace optique intermédiaire qui est situé entre ces deux modules optiques, la pupille P peut être réelle ou virtuelle, matérielle ou immatérielle. Le rayon lumineux $R_M$ représente le rayon marginal du champ sur axe. Il en pointillés courts sur la figure 5. Le rayon lumineux $R_P$ représente le rayon principal du champ maximal. Il est représenté en traits continus. Le rayon lumineux R représente un rayon lumineux quelconque, pour un angle d'ouverture et un champ intermédiaires. Il est représenté en traits pointillés longs.

L'écart normal aberrant image, en lumière monochromatique, qui représente l'erreur de front d'onde du système optique, s'écrit sous la forme des sommes de Seidel:

$$\Delta(h, y, \varphi, \psi) = S_I.h^4 + S_{II}.h^3y.\cos(\varphi - \psi) + S_{III}.h^2y^2.\cos\big(2(\varphi - \psi)\big)$$
$$+ S_{IV}.h^2y^2 + S_V.hy^3.\cos(\varphi - \psi)$$

Où h représente l'angle d'ouverture normalisé du rayon quelconque, y représente son champ radial normalisé, $\varphi$ son angle d'azimut orthoradial dans la pupille et $\psi$ son angle d'azimut dans le champ comme représenté sur figures 6 et 7. Les coefficients $S_I$, $S_{II}$, $S_{III}$, $S_{IV}$ et $S_V$ représentent respectivement l'aberration sphérique, la coma, l'astigmatisme, la courbure de champ et la distorsion du système dans son espace image.

Dans le cas d'une lumière polychromatique, le chromatisme de grandeur apparente dépend généralement de la position de pupille. Ainsi, pour une lentille simple, si la pupille coïncide avec la lentille, cette aberration disparaît.

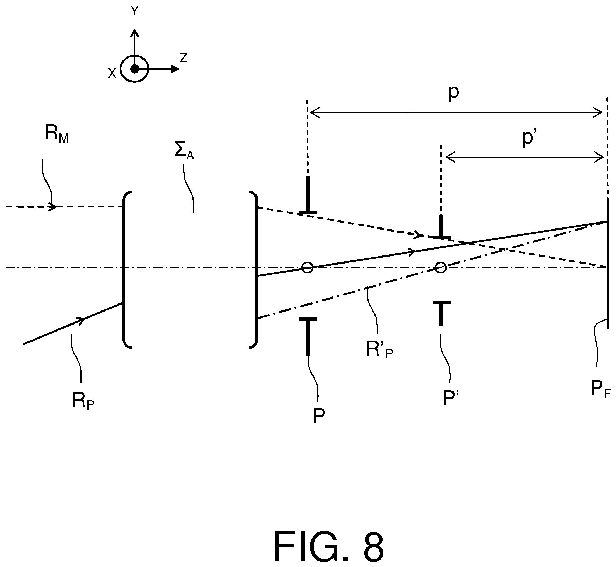

La figure 8 illustre un déplacement de pupille dans un système $\Sigma$ selon l'invention référencé dans un repère (x, y, z). Sur cette figure, les distances p et p' représentent respectivement les positions P et P' de la pupille de sortie dans l'espace image, avant et après déplacement de cette dernière. Le rayon lumineux $R_M$ représente le rayon marginal du champ sur axe. Il en pointillés courts sur la figure 8. Le rayon lumineux $R_P$ représente le rayon principal du champ maximal. Il est représenté en traits continus. Il passe par le centre de la pupille P. Sur la figure 8, ce point d'intersection avec le centre de la pupille est matérialisé par un cercle.

On démontre que lorsqu'on déplace la pupille du système, tout en conservant la même ouverture, c'est-à-dire en travaillant à invariant de Lagrange constant, les amplitudes de certaines aberrations vont varier. Ces variations d'aberrations sont fonction de l'amplitude du déplacement de la pupille et des aberrations résiduelles du système dans son espace image et sont égales, en première approximation, à :

$$\Delta S_I = 0$$

$$\Delta S_{II} = -4S_I.\Delta\left(\frac{1}{p}\right)$$

$$\Delta S_{III} = -S_{II}.\Delta\left(\frac{1}{p}\right) + 2S_I.\Delta^2\left(\frac{1}{p}\right)$$

$$\Delta S_{IV} = -2S_{II}.\Delta\left(\frac{1}{p}\right) + 4S_I.\Delta^2\left(\frac{1}{p}\right) = 2.\Delta S_{III}$$

$$\Delta S_V = -2(S_{III} + S_{IV}).\Delta\left(\frac{1}{p}\right) + 3S_{II}.\Delta^2\left(\frac{1}{p}\right) - 4S_I.\Delta^3\left(\frac{1}{p}\right)$$

avec

$$\Delta^n\left(\frac{1}{p}\right) = \left(\frac{1}{p'} - \frac{1}{p}\right)^n$$

Les variations $\Delta S_J$ dépendent des aberrations résiduelles $S_I$, $S_{II}...S_{J-1}$. $\Delta S_I$, $\Delta S_{II}$, $\Delta S_{III}$, $\Delta S_{IV}$ et $\Delta S_V$ représentent respectivement les variations d'aberration sphérique, de coma, d'astigmatisme, de courbure de champ et de distorsion à l'ordre 3, lorsque l'on déplace la pupille de sortie d'une quantité égale à la différence entre p' et p.

Lorsque l'on déplace la pupille, le tracé du rayon marginal reste inchangé lorsqu'on déplace la pupille sans modifier l'ouverture du système. En revanche, lorsque la pupille de sortie se déplace de P en P', alors le rayon principal R$_P$ se déplace également en R'$_P$ et les aberrations de champ sont par conséquent modifiées.

L'erreur de front d'onde, après avoir déplacé la pupille, s'écrit donc :

$$\Delta(h, y, \varphi, \psi) = (S_I + \Delta S_I).h^4 + (S_{II} + \Delta S_{II}).h^3 y. \cos(\varphi - \psi)$$
$$+ (S_{III} + \Delta S_{III}).h^2 y^2. \cos(2(\varphi - \psi))$$
$$+ (S_{IV} + \Delta S_{IV}).h^2 y^2 + (S_V + \Delta S_V).h y^3. \cos(\varphi - \psi)$$

Ces formules permettent de constater qu'un déplacement de pupille, s'il ne permet pas de corriger les aberrations résiduelles du système, permet néanmoins de jouer sur l'équilibrage des aberrations dans le champ, étant donné qu'elles ne font pas varier l'aberration sphérique, qui est la seule aberration géométrique présente sur l'axe du système.

Il existe également des positions d'iris, à priori distinctes, qui permettent d'annuler au choix les aberrations de coma, d'astigmatisme, de courbure ou de distorsions résiduelles. Par exemple, dans une configuration donnée, si le système optique présente une aberration sphérique résiduelle S$_I$ et une erreur de coma résiduelle S$_{II}$, il est possible d'annuler cette coma résiduelle S$_{II}$ en déplaçant la pupille d'une Quantité p' telle que :

$$\Delta S_{II} = -S_{II} = -4 S_I . \left( \frac{1}{p'} - \frac{1}{p} \right)$$

C'est-à-dire tel que :

$$p' - p = \frac{4p . \dot{S_I}}{p . S_{II} + 4 S_I} - p$$

Cette particularité peut être avantageusement exploitée dans le cas d'un zoom optique. En effet, dans un zoom optique à iris fixe, on observe généralement une variation des aberrations de champ lorsque l'on déplace l'élément 2 et l'élément 3, c'est-à-dire lorsque l'on fait varier la focale.

Ainsi, on observe typiquement des aberrations d'ouverture à la longue focale, c'est-à-dire principalement de l'aberration sphérique et de la coma et des aberrations de champ à la courte focale que sont l'astigmatisme, la courbure et la distorsion. Ainsi, un déplacement maîtrisé de l'iris permet de diminuer significativement les aberrations résiduelles du système. On peut ainsi choisir avantageusement une position d'iris qui minimise la coma aux longues focales, et une autre position d'iris qui minimise l'astigmatisme et la courbure de champ aux courtes focales.

En extrapolant cette méthode pour chaque focale, il est donc possible de calculer la position d'iris qui diminue au mieux les aberrations dans le champ et d'en déduire une loi de déplacement spécifique à l'iris. Son diamètre doit être, quant à lui, calculé de sorte à conserver une ouverture constante en fonction de la focale du système.

## Revendications

1. Zoom optique (Z2) comportant une pupille à iris mobile (PM) délimitant un faisceau optique sur l'axe et se déplaçant selon une loi de déplacement, le zoom comporte quatre groupes de lentilles successifs, le premier (21) et le quatrième groupes (24) étant fixes, le second (22) et le troisième groupe (23) étant mobiles et disposés entre le premier et le quatrième groupe, le premier groupe étant un groupe divergent, le second groupe étant un groupe convergent, le troisième groupe étant un groupe divergent, le quatrième groupe étant un groupe convergent, l'iris se situant dans le second groupe ou entre le second groupe et le troisième groupe ou dans le troisième groupe ou entre le troisième groupe et le quatrième groupe, le diamètre de l'iris variant selon une loi de variation, fonction de la loi de déplacement de la pupille mobile de façon à conserver une ouverture constante en fonction de la focale du système, **caractérisé en ce que** le zoom optique comporte une lucarne mobile vignettant le faisceau optique dans le champ, ladite lucarne mobile se déplaçant selon une seconde loi de déplacement, le diamètre de cette lucarne variant selon une seconde loi de variation, fonction de la seconde loi de déplacement de ladite lucarne mobile, et **en ce que** lors des déplacements de la pupille mobile et de la lucarne mobile, les variations de diamètre de la pupille et de la lucarne sont telles qu'au-delà d'un certain déplacement, la pupille devient la lucarne et la lucarne devient la pupille.

2. Zoom optique selon la revendication 1, **caractérisé en ce que**, pour une focale de zoom donnée, la position de la pupille est celle qui minimise l'aberration de champ la plus importante à ladite focale.

**3.** Zoom optique selon la revendication 2, **caractérisé en ce que**, pour les longues focales du zoom, la position de la pupille est celle qui minimise la coma et pour les focales courtes du zoom, la position de la pupille est celle qui minimise l'astigmatisme et/ou la courbure de champ.

**Patentansprüche**

**1.** Optischer Zoom (Z2), der eine mobile Irispupille (PM) umfasst, die einen optischen Strahl auf der Achse begrenzt und sich gemäß einem Bewegungsgesetz bewegt, wobei der Zoom vier Gruppen von aufeinander folgenden Linsen umfasst, wobei die erste (21) und die vierte Gruppe (24) fixiert sind, wobei die zweite (22) und die dritte Gruppe (23) beweglich und zwischen der ersten und vierten Gruppe angeordnet sind, wobei die erste Gruppe eine divergente Gruppe ist, die zweite Gruppe eine konvergente Gruppe ist, die dritte Gruppe eine divergente Gruppe ist, die vierte Gruppe eine konvergente Gruppe ist, wobei sich die Iris in der zweiten Gruppe oder zwischen der zweiten Gruppe und der dritten Gruppe oder in der dritten Gruppe oder zwischen der dritten Gruppe und der vierten Gruppe befindet, wobei der Durchmesser der Iris gemäß einem Variationsgesetz in Abhängigkeit vom Bewegungsgesetz der beweglichen Pupille variiert, um eine konstante Öffnung in Abhängigkeit von der Brennweite des Systems zu konservieren, **dadurch gekennzeichnet, dass** der optische Zoom eine bewegliche Blende zeigt, die den optischen Strahl in dem Feld vignettiert, wobei sich die bewegliche Blende gemäß einem zweiten Bewegungsgesetz bewegt, wobei der Durchmesser dieser Blende gemäß einem zweiten Variationsgesetz in Abhängigkeit vom zweiten Bewegungsgesetz der beweglichen Blende variiert, und dadurch, dass bei den Bewegungen der beweglichen Pupille und der beweglichen Blende die Durchmesservariationen der Pupille und der Blende derart sind, dass jenseits einer bestimmten Bewegung, die Pupille zur Blende wird und die Blende zur Pupille wird.

**2.** Optischer Zoom nach Anspruch 1, **dadurch gekennzeichnet, dass** für eine gegebene Zoom-Brennweite, die Position der Pupille diejenige ist, die die größte Feldaberration auf der Brennweite minimiert.

**3.** Optischer Zoom nach Anspruch 2, **dadurch gekennzeichnet, dass** für die langen Brennweiten des Zooms die Position der Pupille die ist, die das Koma minimiert, und für die kurzen Brennweiten des Zooms, die Position der Pupille die ist, die den Astigmatismus und/oder die Feldkrümmung minimiert.

**Claims**

**1.** An optical zoom (Z2) comprising a movable iris pupil (PM) defining an optical beam on the axis and moving according to a movement rule, the zoom comprises four groups of successive lenses, the first (21) and the fourth group (24) being fixed, the second (22) and the third group (23) being movable and disposed between the first and the fourth group, the first group being a divergent group, the second group being a convergent group, the third group being a divergent group, the fourth group being a convergent group, the iris being located in the second group or between the second group and the third group or in the third group or between the third group and the fourth group, the diameter of the iris varying according to a variation rule, as a function of the movement rule of the movable pupil so as to maintain a constant opening as a function of the focal length of the system, **characterised in that** the optical zoom comprises a movable aperture vignetting the optical beam in the field, said movable aperture moving according to a second movement rule, the diameter of this aperture varying according to a second variation rule, as a function of the second movement rule of said movable aperture, and **in that**, during movements of the movable pupil and of the movable aperture, the variations in diameter of the pupil and of the aperture are such that, beyond a certain movement, the pupil becomes the aperture and the aperture becomes the pupil.

**2.** The optical zoom as claimed in claim 1, **characterised in that**, for a given zoom focal length, the position of the pupil is that which minimises the most significant field aberration relative to said focal length.

**3.** The optical zoom as claimed in claim 2, **characterised in that**, for the long focal lengths of the zoom, the position of the pupil is that which minimises the coma and, for the short focal lengths of the zoom, the position of the pupil is that which minimises the astigmatism and/or the field curvature.

Z1

P_F

12  13  14

11

# FIG. 1

Z1

P_F

12  13  14

11

# FIG. 2

# FIG. 3

# FIG. 4

FIG. 5

FIG. 6

FIG. 7

FIG. 8

## RÉFÉRENCES CITÉES DANS LA DESCRIPTION

**Documents brevets cités dans la description**

- US 2013250160 A

- US 3918798 A

**Littérature non-brevet citée dans la description**

- Zoom lens design for projection optics. *Proceedings of SPIE,* vol. 9626, 962617